# EUROPÄISCHE PATENTANMELDUNG

(11) **EP 0 778 193 A1**
(43) Veröffentlichungstag der Anmeldung: **11.06.1997**
(21) Anmeldenummer: 96118672.3
(22) Anmeldetag: 21.11.1996
(51) Int. Cl.: B62B 5/04, F16C 1/22

(54) **Fahrbares Gerät mit Einstellvorrichtung für Brems-Bowdenzüge**

(30) Priorität: 05.12.1995 DE 29519263 U
(71) Anmelder: WANZL METALLWARENFABRIK GMBH, D-89336 Leipheim (DE)
(72) Erfinder: Ponicki, Ralf, 86159 Augsburg (DE)

(57) **Zusammenfassung**

Die Erfindung betrifft ein fahrbares Gerät (1) mit einer Seilzugbremse (6), die zum Einwirken auf wenigstens ein Laufrad (2) des fahrbaren Gerätes (1) bestimmt ist, welches eine von Hand betätigbare Einrichtung (3) zur Beeinflussung der auf das Laufrad (2) einwirkenden Bremskraft aufweist, wobei die Bremskraft durch ein federbeaufschlagtes und bewegbar gelagertes Bremsteil (7) auf das Laufrad (2) übertragen wird und ein in einer Tülle (13) geführter Seilzug (12) vom Bremsteil (7) zur von Hand betätigbaren Einrichtung (3) geführt ist.
Es wird vorgeschlagen, die Tülle (13) der Seilzugbremse (6) mit einem Ende (14) an einem am fahrbaren Gerät (1) befindlichen Festpunkt (5) und mit dem anderen Ende (15) an einem lageveränderbaren Stützteil (16) abzustützen, wobei das Stützteil (16) einen Gewindeabschnitt (18) aufweist, der ein bewegbar angeordnetes Stellteil (23) trägt, über das sich das Stützteil (16) gegen die Wirkung einer Druckfeder (19) an einem Anschlag (21) abstützt.

## Beschreibung

Die Erfindung betrifft ein fahrbares Gerät mit einer Seilzugbremse, die zum Einwirken auf wenigstens ein Laufrad des fahrbaren Gerätes bestimmt ist, welches eine von Hand betätigbare Einrichtung zur Beeinflussung der auf das Laufrad einwirkenden Bremskraft aufweist, wobei die Bremskraft durch ein federbeaufschlagtes und bewegbar gelagertes Bremsteil auf das Laufrad übertragen wird und ein in einer Tülle geführter Seilzug vom Bremsteil zur von Hand betätigbaren Einrichtung geführt ist.

Fahrbare Geräte dieser Art sind insbesondere als von Hand bewegbare Transportwagen bekannt. Mit Hilfe von wenigstens einer Seilzugbremse, die über eine von Hand betätigbare, meist als Schiebegriff gestaltete Einrichtung betätigbar ist, läßt sich die auf wenigstens ein Laufrad einwirkende Bremskraft steuern, verändern oder aufheben. Durch Abnützung der Laufräder und auch der Bremsteile muß die Seilzugbremse nach gewisser Zeit neu justiert werden. Dieses Nachjustieren kann zu einer kostspieligen Angelegenheit dann werden, wenn eine Vielzahl von fahrbaren Geräten, beispielsweise Kofferkulis, die auf Flughäfen oder in Bahnhöfen eingesetzt sind, betreut werden müssen.

Es ist deshalb Aufgabe der Erfindung, ein fahrbares Gerät der gattungsgemäßen Art so weiterzuentwickeln, daß ein Nachjustieren der Seilzugbremse auf einfachste Weise und mit einem minimalen Aufwand an Zeit möglich ist

Die Lösung der Aufgabe besteht darin, daß die Tülle der Seilzugbremse mit einem Ende an einem am fahrbaren Gerät befindlichen Festpunkt und mit dem anderen Ende an einem lageveränderbaren Stützteil abgestützt ist, wobei das Stützteil einen Gewindeabschnitt aufweist, der ein bewegbar angeordnetes Stellteil trägt, über das sich das Stützteil gegen die Wirkung einer Druckfeder an einem Anschlag abstützt.

Durch die vorgeschlagene Lösung ist es in vorteilhafter Weise möglich, durch einfaches Verdrehen des Stellteiles ein Nachjustieren der Seilzugbremse durchzuführen. Weitere Maßnahmen sind nicht erforderlich, so daß der Justiervorgang in kürzester Zeit durchführbar ist. Bei einer Vielzahl von zu betreuenden fahrbaren Geräten bedeutet dies eine enorme Kosteneinsparung.

Die Erfindung wird anhand eines Ausführungsbeispieles näher erläutert.
Es zeigt
Fig. 1 ein fahrbares Gerät in Form eines Transportwagens;
Fig. 2 die Anordnung einer auf ein Laufrad einwirkenden Seilzugbremse, sowie
Fig. 3 ein weiteres Ausführungsbeispiel.

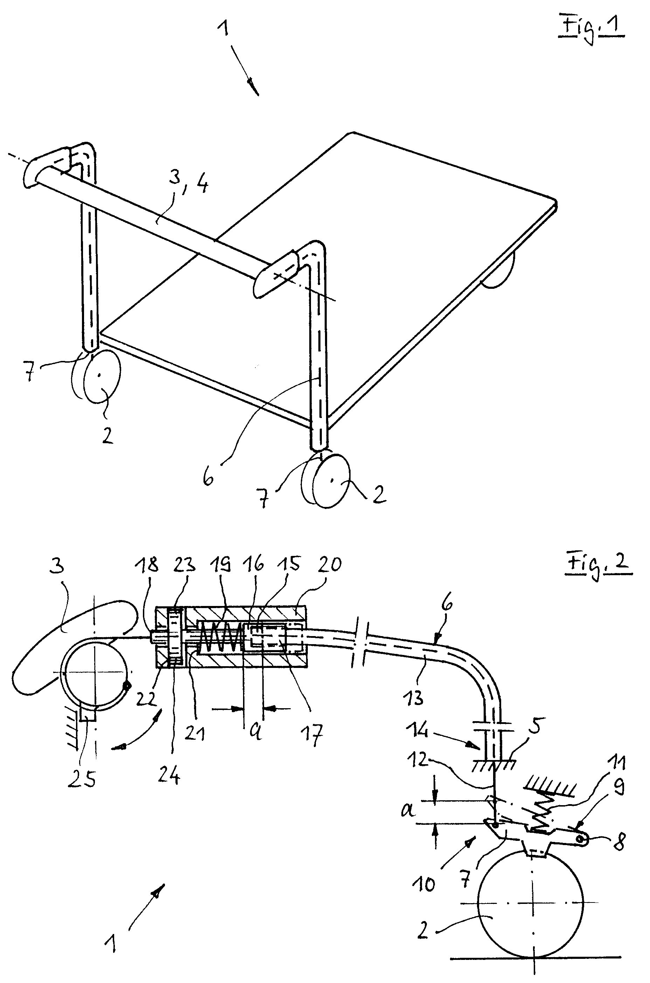

Das in Fig. 1 dargestellte fahrbare Gerät 1 ist als üblicher, von Hand bewegbarer Transportwagen gestaltet. Mit diesem Beispiel soll gezeigt werden, daß unter den Begriff 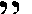 fahrbares Gerät" 1 eine Vielzahl von Transportwagen, Kofferkulis, Einkaufswagen und dergleichen verstanden werden können. Alle diese Geräte 1 weisen eine Seilzugbremse 6 auf, die auf wenigstens eines der Laufräder 2 einwirkt. Die Seilzugbremse 6 ist mit einer von Hand betätigbaren Einrichtung 3 verbunden, die in bekannter Weise als verschwenkbarer Schiebegriff 4, als Bremsbügel, als Drehgriff oder als Bremsgriff gestaltet sein kann. Im Beispiel ist die von Hand betätigbare Einrichtung 3 als ein um eine horizontale Achse verschwenkbarer Schiebegriff 4 gestaltet. Durch Verschwenken des Schiebegriffes 4 läßt sich die auf das wenigstens eine Laufrad 2 einwirkende Bremskraft beeinflussen. Die Seilzugbremse 6 ist im Beispiel mit dem auf das Laufrad 2 einwirkenden, federbeaufschlagten Bremsteil 7 und mit der von Hand betätigbaren Einrichtung 3 so verbunden, daß bei Nichtbetätigen der Einrichtung 3 das wenigstens eine Laufrad 2 gebremst ist.

In einer Prinzipskizze zeigt Fig. 2 die Anordnung der auf ein Laufrad 2 des fahrbaren Gerätes 1 einwirkenden Seilzugbremse 6. Über dem Laufrad 2 ist ein Bremsteil 7 angeordnet, das als einarmiger Hebel gestaltet und um eine am fahrbaren Gerät 1 befindliche horizontale Achse 8 verschwenkbar gelagert ist. Auf den Rücken 9 des Bremsteiles 7 wirkt eine Druckfeder 11, die sich am fahrbaren Gerät 1 abstützt. Durch die Druckfeder 11 wird das Bremsteil 7 konstant gegen das Laufrad 2 gedrückt, so daß dieses gebremst ist. Das vordere freie Ende 10 des Bremsteiles 7 ist mit einem Seilzug 12 verbunden, der Teil der Seilzugbremse 6 ist, zur von Hand betätigbaren Einrichtung 3 führt und an dieser befestigt ist. Der Seilzug 12 ist in einer Tülle 13 geführt, die sich mit einem Ende 14 -im Beispiel ist es das unten liegende Ende- an einem am fahrbaren Gerät 1 befindlichen Festpunkt 5 abstützt. Die Tülle 13 führt zu einem lageveränderbaren Stützteil 16 und stützt sich an diesem ab. Das Stützteil 16 weist einen Gewindeabschnitt 18 auf, der ein Stellteil 23 trägt, das sich durch Drehen auf dem Gewindeabschnitt 18 bewegen läßt. Das Stützteil 16 ist gegen die Wirkung einer Druckfeder 19 an einem ortsfesten Anschlag 21 abgestützt. Die Länge des Seilzuges 12 ist größer als die Länge der Tülle 13, wobei der Seilzug 12 durch das Stützteil 16 hindurchgeführt ist. Im Beispiel ist das Stützteil 16 in einem am fahrbaren Gerät 1 einlegbaren oder ortsfest angeordneten Aufnahmeteil 20 schiebebeweglich geführt. Das Stützteil 16 weist einen hohlen Abschnitt 17 auf, in welchem die Tülle 13 abgestützt ist. Auf dem Gewindeabschnitt 18 ist die Druckfeder 19 geführt, die sich am hohlen Abschnitt 17 des Stützteiles 16 und am bevorzugt am Aufnahmeteil 20 befindlichen Anschlag 21 abstützt. Der Gewindeabschnitt 18 ist durch den Anschlag 21 hindurchgeführt, überbrückt einen am Aufnahmeteil 20 befindlichen Zwischenraum 24 und durchdringt einen am Aufnahmeteil 20 angeordneten weiteren Anschlag 22. Das scheibenförmige Stellteil 23 befindet sich im Zwischenraum 24, wobei der Zwischenraum 24 zwischen den beiden Anschlägen 21 und 22 angeordnet ist. Je nach Verschwenken der von Hand betätigbaren Einrichtung 3, siehe Doppelpfeil, hebt der Seilzug 12 das Bremsteil 7 gegen die Wirkung der Druckfeder 11 an oder er läßt das Bremsteil 7 wieder auf das Laufrad 2 herabsinken.

Gilt es nun, die Seilzugbremse 6 einzustellen oder nachzujustieren, so genügt ein Drehen des am weiteren Anschlag 22 sich abstützenden Stellteiles 23. Durch das Drehen wird das Stützteil 16 in seiner Lage verändert, was durch das Maß a verdeutlicht wird. Die neue Lage des Stützteiles 16 ist strichpunktiert eingezeichnet. In der Zeichnung hat sich das Stützteil 16 nach rechts verändert mit der Folge, daß das oben liegende Ende 15 der Tülle 13 und damit diese selbst, ebenfalls nach rechts bewegt wird und eine neue Lage zum Seilzug 12 einnimmt. Da jedoch die Tülle 13 mit ihrem unteren Ende 14 am Festpunkt 5 abgestützt ist und somit nicht nach unten ausweichen kann, wird der Seilzug 12 gezwungen, in Bezug auf die Tülle 13 eine neue Lage einzunehmen, da auch die von Hand betätigbare Einrichtung 3 an einem ortsfesten Anschlag 25 anliegt. Deshalb wird beim eben anhand der Zeichnung beschriebenen Verändern der Lage des Stützteiles 16 der Seilzug 12 um das Maß a in Richtung zur Einrichtung 3 bewegt, so daß auch das Bremsteil 7 letztendlich um dieses Maß a angehoben wird. Zum besseren Verständnis sind die durch die Maße a erfolgten Lageveränderungen von Tülle 13 und Seilzug 12 übertrieben groß dargestellt. In Wirklichkeit ist die tatsächliche Lageveränderung sehr gering, da das Nachjustieren in der Hauptsache dazu dient, die über die Einrichtung 3 von Hand aufzubringende, zum Verändern der Bremswirkung der Seilzugbremse 6 erforderliche Kraft zu regulieren bzw. einzustellen.

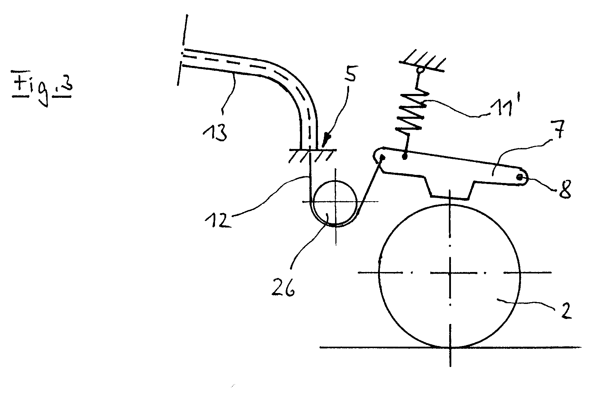

Während in Fig. 2 ein fahrbares Gerät 1 beschrieben wurde, bei dem durch Nichtbetätigen der von Hand bewegbaren Einrichtung 3 wenigstens eines der Laufräder 2 automatisch gebremst ist, zeigt Fig. 3 ein Ausführungsbeispiel, bei dem die von Hand betätigbare Enrichtung 3 auf jeden Fall bewegt werden muß, um eine Bremswirkung auf wenigstens eines der Laufräder 2 zu erzielen. Überläßt man bei diesem Beispiel das fahrbare Gerät 1 sich selbst, bleibt es ungebremst. Im Unterschied zu dem in Fig. 2 beschriebenen Ausführungsbeispiel muß deshalb hier die Druckfeder 11 durch eine Zugfeder 11' ersetzt und der Seilzug 12 ausgehend vom Bremsteil 7 zuerst nach unten und anschließend um eine Umlenkrolle 26 nach oben geführt werden, wo er den Festpunkt 5 erreicht und dort in der Tülle 13 weitergeführt wird. Alle weiteren Teile und Merkmale bleiben so wie in Fig. 2 beschrieben. Durch Anziehen des Seilzuges 12 wird somit das Bremsteil 7 gegen das Laufrad 2 gedrückt. Durch entgegengesetztes Bewegen des Seilzuges 12 hingegen liebt die Zugfeder 11' das Bremsteil 7 wieder vom Laufrad 2 ab.

## Patentansprüche

1. Fahrbares Gerät mit einer Seilzugbremse, die zum Einwirken auf wenigstens ein Laufrad des fahrbaren Gerätes bestimmt ist, welches eine von Hand betätigbare Einrichtung zur Beeinflussung der auf das Laufrad einwirkenden Bremskraft aufweist, wobei die Bremskraft durch ein federbeaufschlagtes und bewegbar gelagertes Bremsteil auf das Laufrad übertragen wird und ein in einer Tülle geführter Seilzug vom Bremsteil zur von Hand betätigbaren Einrichtung geführt ist, dadurch **gekennzeichnet**, daß die Tülle (13) der Seilzugbremse (6) mit einem Ende (14) an einem am fahrbaren Gerät (1) befindlichen Festpunkt (5) und mit dem anderen Ende (15) an einem lageveränderbaren Stützteil (16) abgestützt ist, wobei das Stützteil (16) einen Gewindeabschnitt (18) aufweist, der ein bewegbar angeordnetes Stellteil (23) trägt, über das sich das Stützteil (16) gegen die Wirkung einer Druckfeder (19) an einem Anschlag (21) abstützt.

2. Fahrbares Gerät nach Anspruch 1, dadurch **gekennzeichnet**, daß das Stützteil (16) in einem Aufnahmeteil (20) schiebebeweglich geführt ist und daß der Anschlag (21) am Aufnahmeteil (20) vorgesehen ist.

3. Fahrbares Gerät nach Anspruch 1 oder 2, dadurch **gekennzeichnet**, daß der Seilzug (12) der Seilzugbremse (6) durch das Stützteil (16) hindurchgeführt ist.

4. Fahrbares Gerät nach einem der Ansprüche 1 bis 3, dadurch **gekennzeichnet,** daß die Tülle (13) in einem hohlen Abschnitt (17) des Stützteiles (16) abgestützt ist.

5. Fahrbares Gerät nach einem der Ansprüche 1 bis 4, dadurch **gekennzeichnet**, daß die Druckfeder (19) auf dem Gewindeabschnitt (18) geführt ist.

6. Fahrbares Gerät nach einem der Ansprüche 1 bis 5, dadurch **gekennzeichnet**, daß der Gewindeabschnitt (18) des Stützteiles (16) durch den Anschlag (21) hindurchgeführt ist und einen Zwischenraum (24) überbrückt, in dem das Stellteil (23) angeordnet ist.

7. Fahrbares Gerät nach einem der Ansprüche 1 bis 6, dadurch **gekennzeichnet**, daß durch Drehen des Stellteiles (23) das Stützteil (16) in seiner Lage veränderbar ist.

8. Fahrbares Gerät nach einem der Ansprüche 1 bis 7, dadurch **gekennzeichnet**, daß das Bremsteil (7) als einarmiger Hebel gestaltet ist, dessen freies Ende (10) mit dem Seilzug (12) verbunden ist und daß das Bremsteil (7) über eine am fahrbaren Gerät (1) sich abstützende Druckfeder (11) gegen das Laufrad (2) gedrückt wird.

9. Fahrbares Gerät nach einem der Ansprüche 1 bis 7, dadurch **gekennzeichnet**, daß das Bremsteil (7) mit einer am fahrbaren Gerät (1) angeordneten Zugfeder (11') verbunden ist.
